# EUROPÄISCHE PATENTSCHRIFT

(11) **EP 2 337 964 B1**
(45) Veröffentlichungstag und Bekanntmachung des Hinweises auf die Patenterteilung: **15.08.2012**
(21) Anmeldenummer: 09782972.5
(22) Anmeldetag: 14.09.2009
(51) Int. Cl.: F16D 55/22, F16D 66/00

(54) **BREMSSATTEL FÜR EINE SCHEIBENBREMSE**
BRAKE CALIPER FOR A DISK BRAKE
ÉTRIER DE FREIN POUR UN FREIN À DISQUE

(30) Priorität: 23.09.2008 DE 102008042298
(43) Veröffentlichungstag der Anmeldung: 29.06.2011
(73) Patentinhaber: Robert Bosch GmbH, 70442 Stuttgart (DE)
(72) Erfinder: VOLLERT, Herbert, 71665 Vaihingen/Enz (DE); DUKART, Anton, 70839 Gerlingen (DE); FOITZIK, Bertram, 74360 Ilsfeld (DE); NAGEL, Willi, 71686 Remseck/Hochdorf (DE); GOETZELMANN, Bernd, 71277 Rutesheim (DE)
(86) Internationale Anmeldenummer: PCT/EP2009/061877
(87) Internationale Veröffentlichungsnummer: WO 2010/034640

(56) Entgegenhaltungen:
- EP-A- 0 849 576
- DE-A1- 3 515 126
- DE-A1-102004 059 081
- DE-A1-102006 026 223
- DE-B3-102006 029 978

## Beschreibung

### Stand der Technik

Die Erfindung betrifft einen Bremssattel für eine Scheibenbremse mit einer Einrichtung zur Messung einer Verformung des Bremssattels durch eine Spannkraft bei Betätigung der Scheibenbremse mit den Merkmalen des Oberbegriffs des Anspruchs 1. Die Spannkraft ist die Kraft, mit der Reibbremsbeläge bei Betätigung der Scheibenbremse gegen eine Bremsscheibe gedrückt werden. Die Spannkraft verformt den Bremssattel elastisch, sie weitet ihn auf. Die Verformung des Bremssattels ist also ein Maß für die Spannkraft. Zweck der Messung der Verformung des Bremssattels ist normalerweise eine Regelung der Bremskraft der Scheibenbremse oder auch eine Regelung der Spannkraft, von der die Bremskraft über den Reibwert µ abhängig ist.

Es sind verschiedene Möglichkeiten zur Messung der Verformung eines Bremssattels zur Regelung der Spann- oder der Bremskraft vorgeschlagen worden. So offenbart beispielsweise die Offenlegungsschrift DE 103 28 242 A1 einen Dehnmessstreifen im Bereich des Jochs eines Bremssattels anzubringen, um die Verformung des Bremssattels zu messen. Das Joch ist der die Bremsscheibe am Umfang übergreifende Bereich des Bremssattels.

Außer einem Dehnmessstreifen schlägt die Offenlegungsschrift DE 102 01 555 A1 vor, ein Piezo-Element zwischen einem Reibbremsbelag und dem Bremssattel anzuordnen, mit dem die Andruckkraft des Reibbremsbelags an die Bremsscheibe und damit die Spannkraft der Scheibenbremse selbst gemessen wird.

Die Offenlegungsschrift DE 103 14 449 A1 schlägt stattdessen die Anordnung eines Magnetsensors zwischen einem Reibbremsbelag und dem Bremssattel vor, der Änderungen eines Magnetfelds beispielsweise eines Permanentmagneten aufgrund der Spannkraft misst. Als Magnetsensoren schlägt die genannte Offenlegungsschrift AMR-oder GMR-Sensoren vor, die als solches bekannt sind.

Die Offenlegungsschrift DE 101 52 422 A1 schlägt die Anordnung eines Kraftwandlers als Kraftsensor zwischen einem Reibbremsbelag und einem elektromechanischen Aktuator zur Messung der Spannkraft der Scheibenbremse vor. Der elektromechanische Aktuator weist einen Elektromotor und beispielsweise einen Spindeltrieb auf, der die Drehbewegung des Elektromotors in eine translatorische Bewegung umsetzt, mit der er den Reibbremsbelag zur Betätigung der Scheibenbremse gegen die Bremsscheibe drückt.

Das Patent DE 10 2006 029 978 B3 offenbart einen Bremssattel, in dem ein Spalt quer zur Bremsscheibe und über etwa eine Hälfte einer Breite des Bremssattels angebracht ist, wodurch ein L-förmiges Element gebildet ist, dessen langer Schenkel an seinem Fuß einstückig mit dem Joch des Bremssattels ist und das im Übrigen durch den Spalt vom Bremssattel getrennt ist. Zur Messung einer Verformung des Bremssattels durch eine Spannkraft bei einer Bremsbetätigung wird eine Änderung einer Spaltweite an einem freien Ende des L-förmigen Elements gemessen.

Die Offenlegungsschrift DE 10 2006 026 223 A1 offenbart einen Bremssattel, der ebenfalls ein L-förmiges Element aufweist, dessen eines Ende ungefähr in einer Mitte eines Jochs des Bremssattels einstückig mit dem Bremssattel ist. Zwischen dem L-förmigen Element und dem Bremssattel besteht ein Spalt. Nahe einem freien Ende des L-förmigen Elements wird mit einem Kraftsensor eine Kraft zwischen dem L-förmigen Element und einem Schenkel des Bremssattels gemessen. Die gemessen Kraft ändert sich bei einer Verformung des Bremssattels durch eine Spannkraft bei einer Bremsbetätigung und ist damit ein Maß für die Spannkraft.

### Offenbarung der Erfindung

Der erfindungsgemäße Bremssattel mit den Merkmalen des Anspruchs 1 weist einen Halter auf, der an einer Befestigungsstelle unbeweglich mit dem Bremssattel verbunden ist. Die Messung der Verformung des Bremssattels erfolgt vorzugsweise am freien Ende des Halters und jedenfalls mit Abstand von der Befestigungsstelle des Halters. Durch die Verformung des Bremssattels bei einer Betätigung der Scheibenbremse bewegt sich der Bremssattel in Bezug auf den Halter, die Bewegung zwischen Halter und Bremssattel ist also ein Maß für die Verformung des Bremssattels und damit für die Spannkraft, mit der die Reibbremsbeläge bei Betätigung der Scheibenbremse gegen die Bremsscheibe gedrückt werden. Der Halter kann beispielsweise stabförmig und an einem Ende am Bremssattel befestigt sein. Da der Halter unbelastet ist, wenn er nur an einem Ende befestigt ist, verformt er sich nicht mit dem Bremssattel, so dass die Verformung des Bremssattels eine Bewegung des Halters gegenüber dem Bremssattel bewirkt, die am freien Ende des Halters messbar ist. Der Halter kann allerdings auch nach Art eines Biegebalkens an beiden Enden mit dem Bremssattel verbunden sein, so dass er sich bei einer Verformung des Bremssattels ebenfalls verformt. Auch in diesem Fall kann eine Bewegung des Halters gegenüber dem Bremssattel bei einer Verformung des Bremssattels und des Halters beispielsweise in der Mitte zwischen den Befestigungsstellen gemessen werden. Ebenfalls ist eine Messung der Verformung des Halters beispielsweise mit einem Dehnmessstreifen möglich. Der Halter kann auch flächig und rundherum mit dem Bremssattel verbunden sein oder in sonstiger Weise so ausgestaltet sein, dass er sich bei Verformung des Bremssattels ebenfalls verformt, so dass eine Relativbewegung zwischen dem Halter und dem Bremssattel oder die Verformung des Halters gemessen werden kann. Durch den Abstand des Messorts von der Befestigungsstelle des Halters am Bremssattel lässt sich eine vergleichsweise große Bewegung zwischen dem Halter und dem Bremssattel bei einer Verformung des Bremssattels und damit eine hohe Messgenauigkeit erzielen. Die Messung erfolgt kraftlos, die Messeinrichtung wird insbesondere nicht von der Spannkraft der Scheibenbremse beaufschlagt. Vorzugsweise ist der Halter so auszubilden, anzuordnen und zu befestigen, dass sich eine möglichst große Bewegung gegenüber dem Bremssattel bei dessen Verformung durch eine Spannkraft ergibt. Insbesondere ist eine Anordnung des Halters im Bereich des Jochs des Bremssattels quer über die Bremsscheibe hinweg vorgesehen.

Der Halter ist in einem Hohlraum des Bremssattels angeordnet. Die Einrichtung zur Messung der Verformung ist in den Bremssattel integriert und dadurch vor äußeren Einflüssen, insbesondere vor Wasser und Verschmutzung geschützt. Der Halter kann als einseitig befestigter Stab oder als beidseitig befestigter Biegebalken in einem Loch beispielsweise im Joch des Bremssattels angeordnet sein. Das Loch oder allgemein der Hohlraum wird beim Gießen des Bremssattels hergestellt und benötigt in diesem Fall keinen separaten Bearbeitungsschritt.

Eine Ausgestaltung der Erfindung sieht vor, dass der Halter denselben oder zumindest einen ähnlichen Temperaturdehnungskoeffizienten wie der Bremssattel aufweist um eine Beeinflussung der Messung durch Temperaturänderungen niedrig zu halten.

Insbesondere ist die Erfindung für eine elektromechanische Scheibenbremse vorgesehen, also für eine Scheibenbremse, die einen elektromechanischen Aktuator aufweist.

### Kurze Beschreibung der Zeichnungen

Die Erfindung wird nachfolgend anhand zweier in der Zeichnung dargestellter Ausführungsformen näher erläutert. Es zeigen:
- Figur 1: Eine erste Ausführungsform eines erfindungsgemäßen Bremssattels im Querschnitt;
- Figur 2: den Bremssattel aus Figur 1 bei betätigter Scheibenbremse;
- Figur 3: eine zweite Ausführungsform eines erfindungsgemäßen Bremssattels im Querschnitt; und
- Figur 4: den Bremssattel aus Figur 3 bei betätigter Scheibenbremse.

Die Figuren sind vereinfachte Schemadarstellungen zum Verständnis und zur Erläuterung der Erfindung.

### Ausführungsformen der Erfindung

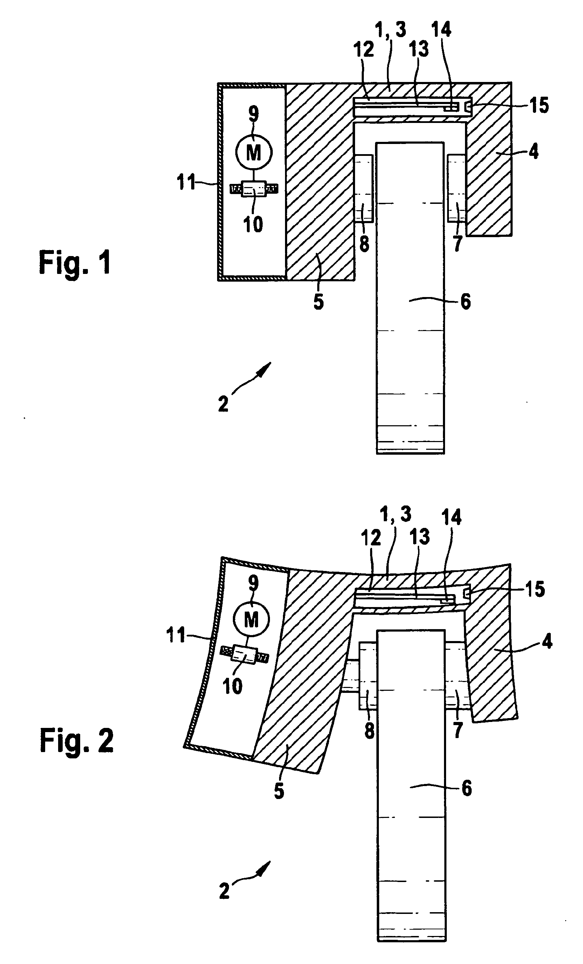

Figur 1 zeigt einen Bremssattel 1 einer Scheibenbremse 2 gemäß der Erfindung im Querschnitt. Der Bremssattel 1 weist ein Joch 3 und zwei Schenkel 4, 5 beiderseits einer Bremsscheibe 6 auf. Das Joch 3 ist der Bereich, der die Bremsscheibe 6 außerhalb ihres Umfangs übergreift und die beiden Schenkel 4, 5 miteinander verbindet. An der Innenseite des einen Schenkels 4 ist ein Reibbremsbelag 7 fest angeordnet. Die Innenseite ist die der Bremsscheibe 6 zugewandte Seite des Schenkels 4. An der Innenseite des anderen Schenkels 5 ist ein Reibbremsbelag 8 angeordnet, der zur Betätigung der Scheibenbremse 2 gegen die Bremsscheibe 6 drückbar ist. Dabei verschiebt er den Bremssattel 1 quer zur Bremsscheibe 6, so dass auch der andere Reibbremsbelag 7 gegen die andere Seite der Bremsscheibe 6 gedrückt und letztere gebremst wird. Zum Andrücken des Reibbremsbelags 8 gegen die Bremsscheibe 6 weist der Bremssattel 1 einen Aktuator mit einem Elektromotor 9 und ein Getriebe, beispielsweise einen Spindeltrieb 10 auf, das eine drehende Antriebsbewegung des Elektromotors 9 in eine translatorische Bewegung umsetzt, mit der der Reibbremsbelag 8 gegen die Bremsscheibe 6 drückbar ist. Die Scheibenbremse 2 ist somit eine sog. elektromechanische Scheibenbremse 2. Der Aktuator 9, 10 ist ein einem Gehäuse 11 auf einer Seite des Bremssattels 1 angeordnet.

Im Joch 3 weist der Bremssattel 1 einen Hohlraum 12 auf, der die Form eines länglichen Lochs aufweist und sich quer von einer Seite zur anderen Seite, also von einem Schenkel 5 zum anderen Schenkel 4 des Bremssattels 1 erstreckt. Mit "länglich" ist gemeint, dass das Loch eine Länge oder Tiefe aufweist, die ein Mehrfaches seines Quermessers beträgt. Der das Loch bildende Hohlraum 12 ist beim Gießen des Bremssattels 2 beispielsweise durch einen in der Gussform angeordneten Kern geformt, so dass kein separater Arbeitsschritt zur Herstellung des Hohlraums 12 notwendig ist. Im Hohlraum 12 ist ein stabförmiger Halter 13 angeordnet, dessen eines Ende unbeweglich mit dem Bremssattel 1 verbunden ist. Das andere Ende des Halters 13 ist frei und trägt einen Magnetsensor 14, der mit einem Permanentmagneten 15 zusammen wirkt, der nahe dem Magnetsensor 14 im Hohlraum 12 befestigt ist. Der Magnetsensor 14 ist ein Sensorchip, also ein elektronisches Bauteil, das beispielsweise einen Hall-, AMR- oder GMR-Sensor aufweist. Der Magnetsensor 14 reagiert auf Änderungen des Magnetfeldes des Permanentmagneten 15, also beispielsweise auf eine Lageänderung des Magnetsensors 14 in Bezug auf den Permanentmagneten 15. Derartige Magnetsensoren 14 sind dem Fachmann bekannt und sollen hier nicht näher erläutert werden. Der stabförmige Halter 13 besteht aus einem Material, das nahezu denselben Temperaturdehnungskoeffizienten aufweist wie der Bremssattel 1, so dass Temperaturänderungen die Lage des Magnetsensors 14 in Bezug auf den Permanentmagneten 15 so gut wie nicht beeinflussen. Es ist auch die Anordnung des Magnetsensors 14 fest am Bremssattel 1 in dessen Hohlraum 12 und des Permanentmagneten 15 am freien Ende des Halters 13 möglich. Eine weitere Möglichkeit ist, den Magnetsensor 14 und den Permanentmagneten 15 fest am Bremssattel 1 im Hohlraum 12 so anzuordnen, dass sich der Halter 13 zwischen ihnen befindet. Der Halter 13 beeinflusst ein Magnetfeld des Permanentmagneten 15, eine Bewegung des Halters 13 in Bezug auf den Permanentmagneten 15 ändert dessen Magnetfeld, die mit dem Magnetsensor 14 messbar ist. Die Aufzählung ist nicht abschließend.

Zur Betätigung der Schreibenbremse 1 wird der eine Reibbremsbelag 8 mit dem elektromechanischen Aktuator 9, 10 gegen die eine Seite der Bremsscheibe 6 gedrückt. Wie bereits gesagt wird der Bremssattel 1 quer zur Bremsscheibe 6 verschoben und drückt den anderen Reibbremsbelag 7 gegen die andere Seite der Bremsscheibe 6. Die Reibbremsbeläge 7, 8 werden mit einer vom Aktuator 9, 10 ausgeübten Spannkraft von beiden Seiten gegen die Bremsscheibe 6 gedrückt. Dadurch werden die Schenkel 4, 5 des Bremssattels 1 auseinandergedrückt, der Bremssattel 1 wird elastisch aufgeweitet, wie es in Figur 2 stark übertrieben dargestellt ist. Die Aufweitung des Bremssattels 1 biegt dessen Joch 3 mit dem Hohlraum 12. Der stabförmige Halter 13, der an einem Ende unbeweglich im Bremssattel 1 befestigt und dessen anderes Ende frei ist, wird durch die Verformung des Bremssattels 1 nicht verformt, sein freies Ende bewegt sich deswegen in Bezug auf den Permanentmagneten 15, der fest im Hohlraum 12 des Bremssattels 1 angeordnet ist. Diese Bewegung des freien Endes des Halters 13 in Bezug auf den Permanentmagneten 15 aufgrund der Aufweitung des Bremssattels 1 bei Betätigung der Scheibenbremse 2 ist mit dem Magnetsensor 14 messbar, der am freien Ende des Halters 13 angebracht ist. Mit dem Magnetsensor 14 lässt sich somit die Aufweitung des Bremssattels 1 messen, die ein Maß für die Spannkraft ist, mit der die Reibbremsbeläge 7, 8 gegen die Bremsscheibe 6 gedrückt werden. Dadurch lässt sich eine Bremskraft oder jedenfalls die Spannkraft der Scheibenbremse 2 regeln. Der Halter 13 mit dem Magnetsensor 14 und dem Permanentmagneten 15 bilden eine Einrichtung zur Messung der Verformung des Bremssattels 1 durch die Spannkraft, mit der die Reibbremsbeläge 7, 8 bei einer Betätigung der Scheibenbremse 2 gegen die Bremsscheibe 6 gedrückt werden. Die Messung der Aufweitung oder allgemein der Verformung des Bremssattels 2 muss nicht magnetisch erfolgen, es sind auch andere Messmethoden, beispielsweise auf induktiver oder kapazitiver Basis oder eine optische Messung der Lageänderung des freien Endes des Halters 13 im Hohlraum 12 des Bremssattes 1 möglich.

Durch die Anordnung der Messeinrichtung im Hohlraum 12 ist die Messeinrichtung vor äußeren Einflüssen wie Wasser und Schmutz geschützt. Der Halter 13, der Magnetsensor 14 und der Permanentmagnet 15 sind vorzugsweise so auszubilden und anzuordnen, dass eine gegebene Aufweitung des Bremssattels 1 eine große Bewegung des Magnetsensors 14 in Bezug auf den Permanentmagneten 15, also ein großes Messsignal ergibt. In der Ausführungsform ist eine Anordnung im Joch 3 des Bremssattels 1 quer zur Bremsscheibe 6 gewählt worden. Denkbar ist beispielsweise auch eine Anordnung in einem der Schenkel 4, 5 des Bremssattels 1 radial zur Bremsscheibe 6 (nicht dargestellt). Auch ein L-förmiger Halter, der sich durch das Joch 3 und einen der beiden Schenkel 4, 5 des Bremssattels 1 erstreckt, ist denkbar und vergrößert die Bewegung des Magnetsensors 14 in Bezug auf den Permanentmagneten 15 gegenüber der dargestellten Ausführungsform. Ein gerader Halter 13 in einem geraden Hohlraum 12 ist allerdings leicht herstell- und montierbar und deswegen gewählt worden. Denkbar ist auch ein U-förmiger Halter, der sich durch einen Schenkel 5, durch das Joch 3 und durch den anderen Schenkel 4 des Bremssattels 1 erstreckt (nicht dargestellt). Ein solcher U-förmiger Halter führt zwar zur größten Bewegung seines freien Endes gegenüber dem Bremssattel 1, also zum größten Messsignal, verursacht aber einen hohen Aufwand bei der Herstellung und Montage.

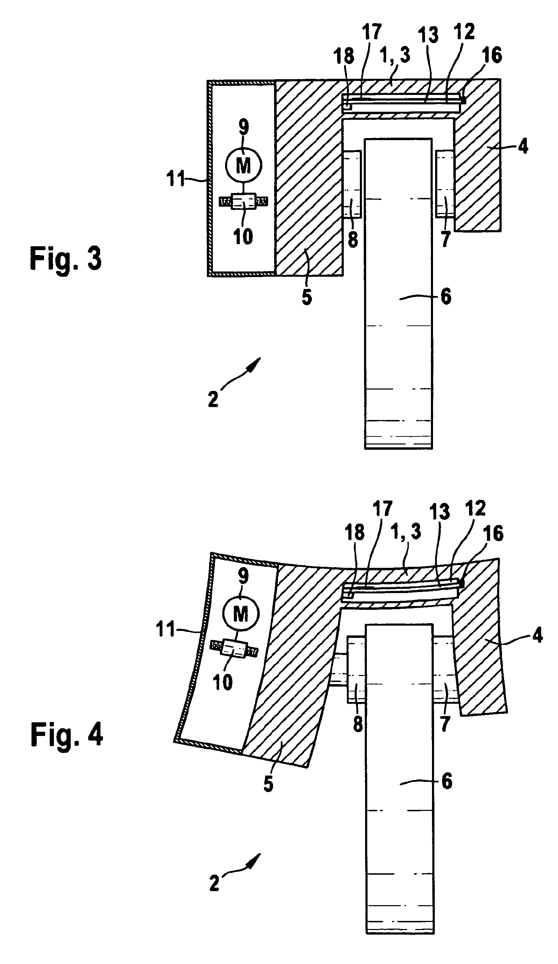

Der Bremssattel 1 aus Figur 3 ist im wesentlichen gleich ausgebildet wie der Bremssattel 1 aus Figur 1, er weist ebenfalls einen länglichen Hohlraum 12 in seinem Joch 3 auf, in dem ein Halter 13 und eine Einrichtung zur Messung der Verformung bzw. Aufweitung des Bremssattels 1 durch die Spannkraft bei einer Betätigung der Scheibenbremse 2 auf. Es werden deswegen die Erläuterungen zu Figuren 1 und 2 in Bezug genommen und nachfolgend im wesentlichen nur die Unterschiede erläutert. Gleiche Bauteile sind mit gleichen Bezugszahlen versehen.

In Figur 3 ist der Halter 13 streifenförmig und sein eines Ende unbeweglich mit dem Bremssattel 1 verbunden. Das andere Ende des Halters 13 liegt auf einem Auflager 16 des Hohlraums 12 im Bremssattel 1 auf. Bei einer Aufweitung des Bremssattels 1 durch die Spannkraft, mit der die Reibbremsbeläge 7, 8 bei einer Betätigung der Scheibenbremse 2 gegen die Bremsscheibe 6 gedrückt werden, wird der Halter 13 elastisch gebogen. Die Aufweitung des Bremssattels 1 und die Biegung des Halters 13 ist in Figur 4 stark übertrieben dargestellt. Der Halter 13 weist einen Dehnmessstreifen 17 auf, mit dem die Biegung des Halters 13 messbar ist. Die Biegung des Halters 13 ist in Maß für die Aufweitung des Bremssattels 1 und somit für die Spannkraft der Scheibenbremse 2. Der Dehnmessstreifen 17 kann beispielsweise auf den Halter 13 aufgeklebt sein. Auch ist es möglich, den Halter 13 aus einem elektrisch nicht leitenden Material herzustellen oder seine Oberfläche zumindest im Bereich des Dehnmessstreifens 17 mit einer elektrisch nicht leitenden Beschichtung zu versehen und den Dehnmessstreifen 17 bzw. dessen mäanderförmige Leiterbahnen ummittelbar auf den Halter 13 aufzubringen. Ein Sensorchip 18 ist in unmittelbarer Nähe des Dehnmessstreifens 17 im Hohlraum 12 im Bremssattel 1 angeordnet. Der Sensorchip 18 weist eine Auswerteelektronik für den Dehnmessstreifen 17 auf.

Die Erfindung ist nicht auf die dargestellte Bremssattelbauart eines Faustsattels beschränkt, sie ist auch an anderen Sattelbauformen verwirklichbar. Beispielhaft sei ein sog. Rahmensattel genannt (nicht dargestellt). der anstelle der Schenkel 4, 5 Platten beiderseits einer Bremsscheibe aufweist, die an ihren Enden durch Anker verbunden sind, die sich quer außerhalb eines Umfangs der Bremsscheibe quer zu dieser erstrecken. Da die Anker eines Rahmensattels im wesentlichen nur auf Zug beansprucht sind, dürfte sich eine Anordnung des Halters 13 der Einrichtung zur Messung der Verformung des Bremssattels in einer seiner Platten im Bereich zwischen einem Anker und einer Längsmitte der Platte parallel zu einer gedachten Sehne der Bremsscheibe anbieten.

## Patentansprüche

1. Bremssattel für eine Scheibenbremse, mit einer Einrichtung zur Messung einer Verformung des Bremssattels (1) durch eine Spannkraft bei Betätigung der Scheibenbremse (2), die einen Halter (13) aufweist, der an einer Befestigungsstelle unbeweglich mit dem Bremssattel (1) verbunden ist, und die eine Bewegung des Halters (13) gegenüber dem Bremssattel (1) mit Abstand von der Befestigungsstelle des Halters (13) am Bremssattel (1) misst, **dadurch gekennzeichnet, dass** der Halter (13) in einem Hohlraum (12) des Bremssattels (1) angeordnet ist.

2. Bremssattel nach Anspruch 1, **dadurch gekennzeichnet, dass** der Halter (13) im Bereich eines Jochs (3) des Bremssattels (1) angeordnet ist.

3. Bremssattel nach Anspruch 1, **dadurch gekennzeichnet, dass** der Halter (13) so mit dem Bremssattel (1) verbunden ist, dass er sich bei einer Verformung des Bremssattels (1) durch eine Spannkraft bei Betätigung der Scheibenbremse (2) verformt und dass die Verformung des Halters (13) gemessen wird.

4. Bremssattel nach Anspruch 1, **dadurch gekennzeichnet, dass** der Halter (13) denselben Temperaturdehnungskoeffizienten wie der Bremssattel (1) aufweist.

5. Bremssattel nach Anspruch 1, **dadurch gekennzeichnet, dass** die Einrichtung zur Messung der Verformung des Bremssattels (1) einen Magnetsensor (14) oder einen Dehnmessstreifen (17) aufweist.

6. Bremssattel nach Anspruch 1, **dadurch gekennzeichnet, dass** der Bremssattel (1) einen elektromechanischen Aktuator zur Betätigung der Scheibenbremse (2) aufweist.

## Claims

1. Brake caliper for a disc brake, having a device for measuring a deformation of the brake caliper (1) as a result of a clamping force during actuation of the disc brake (2), which device has a holder (13) which is immovably connected to the brake caliper (1) at a fastening point, and which device measures a movement of the holder (13) relative to the brake caliper (1) at a distance from the fastening point of the holder (13) to the brake caliper (1), **characterized in that** the holder (13) is arranged in a cavity (12) of the brake caliper (1).

2. Brake caliper according to Claim 1, **characterized in that** the holder (13) is arranged in the region of a yoke (3) of the brake caliper (1).

3. Brake caliper according to Claim 1, **characterized in that** the holder (13) is connected to the brake caliper (1) in such a way as to be deformed in the event of a deformation of the brake caliper (1) as a result of a clamping force during actuation of the disc brake (2), and **in that** the deformation of the holder (13) is measured.

4. Brake caliper according to Claim 1, **characterized in that** the holder (13) has the same coefficient of thermal expansion as the brake caliper (1).

5. Brake caliper according to Claim 1, **characterized in that** the device for measuring the deformation of the brake caliper (1) has a magnetic sensor (14) or a strain gauge (17).

6. Brake caliper according to Claim 1, **characterized in that** the brake caliper (1) has an electromechanical actuator for actuating the disc brake (2).

## Revendications

1. Etrier de frein pour un frein à disque, comprenant un système de mesure d'une déformation de l'étrier de frein (1) par une force de serrage lors de l'actionnement du frein à disque (2), qui présente un support (13), qui est raccordé au niveau d'une zone de fixation de manière immuable à l'étrier de frein (1), et qui mesure un mouvement du support (13) par rapport à l'étrier de frein (1) à distance de la zone de fixation du support (13) sur l'étrier de frein (1), **caractérisé en ce que** le support (13) est disposé dans une cavité (12) de l'étrier de frein (1).

2. Etrier de frein selon la revendication 1, **caractérisé en ce que** le support (13) est disposé dans la région d'un joug (3) de l'étrier de frein (1) .

3. Etrier de frein selon la revendication 1, **caractérisé en ce que** le support (13) est connecté à l'étrier de frein (1) de telle sorte qu'il se déforme dans le cas d'une déformation de l'étrier de frein (1) due à une force de serrage lors de l'actionnement du frein à disque (2) et **en ce que** la déformation du support (13) est mesurée.

4. Etrier de frein selon la revendication 1, **caractérisé en ce que** le support (13) présente le même coefficient de dilatation thermique qu l'étrier de frein (1).

5. Etrier de frein selon la revendication 1, **caractérisé en ce que** le système de mesure de la déformation de l'étrier de frein (1) présente un capteur magnétique (14) ou une jauge de contrainte (17).

6. Etrier de frein selon la revendication 1, **caractérisé en ce que** l'étrier de frein (1) présente un actionneur électromécanique pour l'actionnement du frein à disque (2).
